# EUROPEAN PATENT APPLICATION

(11) **EP 4 447 466 A1**
(43) Date of publication of application: **16.10.2024**
(21) Application number: 23753092.8
(22) Date of filing: 06.02.2023
(51) Int. Cl.: H04N 21/466, H04N 21/485, H04N 21/431, H04N 21/45, H04N 21/442

(54) **ELECTRONIC DEVICE AND CONTROL METHOD THEREOF**

(30) Priority: 14.02.2022 KR 20220019162
(71) Applicant: Samsung Electronics Co., Ltd, Suwon-si, Gyeonggi-do 16677 (KR)
(72) Inventor: CHOI, Changwon, Suwon-si, Gyeonggi-do 16677 (KR); KIM, Munseok, Suwon-si, Gyeonggi-do 16677 (KR); PARK, Sungyun, Suwon-si, Gyeonggi-do 16677 (KR)
(74) Representative: Appleyard Lees IP LLP
(86) International application number: PCT/KR2023/001664
(87) International publication number: WO 2023/153742

(57) **Abstract**

An electronic apparatus is provided. The electronic apparatus includes a display and a processor connected to the display and configured to control the electronic apparatus, and the processor is configured to identify a plurality of contents as a plurality of content groups, obtain a score for each of the plurality of content groups based on an exposure history of the plurality of content groups and a user's viewing history for the plurality of content groups, obtain a display position of the plurality of content groups based on the obtained score, and control the display to display a UI corresponding to a part of the plurality of content groups based on the obtained display position.

## Description

### [Technical Field]

The present disclosure relates to an electronic apparatus and a controlling method thereof, and more particularly, to an electronic apparatus for providing a plurality of contents and a controlling method thereof.

### [Background Art]

With the development of electronic technology, various types of services have been developed. In particular, display devices such as TVs can provide services that recommend live and over the top (OTT) contents to users. These services are associated with various types of content recommendation engines, each with a recommendation algorithm that utilizes user viewing history, content popularity, and sorting and filtering via content metadata.

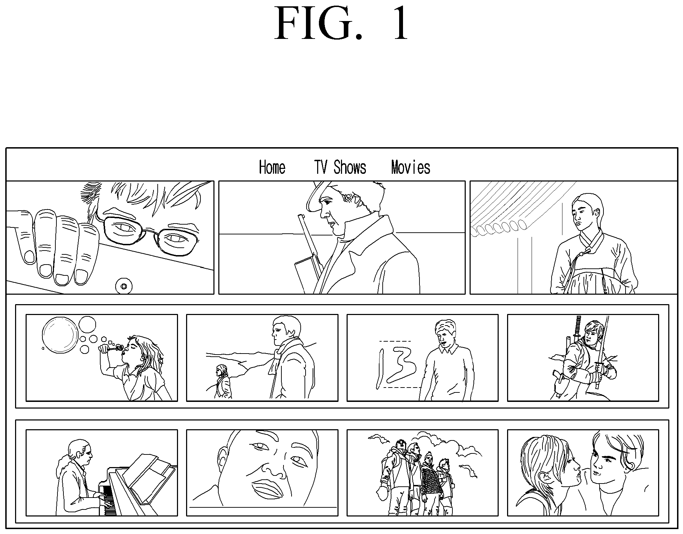

For example, as illustrated in FIG. 1, a display device may display a UI that divides contents into a plurality of categories for recommending video contents, and includes a group of contents corresponding to each category. For example, the contents included in the first row of FIG. 1 may be contents included in the next TV and movies, the contents included in the second row of FIG. 1 may be contents included in original series, the contents included in the third row of FIG. 1 may be contents included in top movies, and the contents located at the top may be more easily exposed to the users. Therefore, how each group of contents is arranged will have a significant impact on content recommendation performance.

Here, the entity organizing each content group may be a recommendation engine, and an image content recommendation service may operate a plurality of content groups generated by the recommendation engine. These groups may be reordered based on user preference information, which may utilize user-specific preference information inferred from the user's past viewing history.

However, prior art content recommendation services utilize metadata content attributes such as genre of content groups. The recommendation engine that creates each group can organize the group's attributes based on the contents of recommended content, which can be specified as the group's attributes.

Therefore, content groups must be given attributes that can serve as a basis for placement. The attributes can be explicitly stated by the recommendation engine or can be inferred based on the attributes of the items inside the content groups.

However, the process of selecting and applying the type of content attributes with intent is required during service development. In addition, it is difficult to determine which types of content attributes are attributes optimized for group placement, and it is unclear whether other content attributes should be considered for better placement criteria. Further, when metadata for each content is poor, there is a problem in that the corresponding group may have disadvantages in terms of group placement strategy.

Accordingly, there is a need to develop a content recommendation method to address the above-described problem.

### [Detailed Description of the Disclosure]

### [Technical Task]

The present disclosure is to provide an electronic apparatus with improved performance of a content recommendation service and a controlling method thereof.

### [Technical Solution]

An electronic apparatus according to an embodiment includes a display and a processor connected to the display and configured to control the electronic apparatus, and the processor is configured to identify a plurality of contents as a plurality of content groups, obtain a score for each of the plurality of content groups based on an exposure history of the plurality of content groups and a user's viewing history for the plurality of content groups, obtain a display position of the plurality of content groups based on the obtained score, and control the display to display a UI corresponding to a part of the plurality of content groups based on the obtained display position.

The exposure history may include at least one of a history in which a UI corresponding to each of the plurality of content groups is provided via the display or a history in which a cursor is positioned on a UI corresponding to each of the plurality of content groups.

The processor may be configured to control the display to display a UI corresponding to a content group of a first score higher than a UI corresponding to a content group of a second score that is smaller than the first score.

The apparatus may further include a communication interface, and the processor may be configured to, based on identifying a content group having no viewing history of the user from among the plurality of content groups, control the communication interface to transmit a request signal for requesting a viewing history of another user for the identified content group to a server, and based on a viewing history of the another user being received from the server via the communication interface, obtain a score for the identified content group based on an exposure history of the identified content group and the viewing history of the another user.

The processor may be configured to control the communication interface to transmit the request signal and the viewing history of the user to the server and receive the viewing history of the another user from the server via the communication interface, and the another user may be a user identified by the server based on a viewing history of the user.

The apparatus may further include a communication interface, and the processor may be configured to, based on information regarding a new group being received from a server via the communication interface, control the display the part of the plurality of content groups and a UI corresponding to the new group.

The processor may be configured to obtain an exposure history of the new group and a user's viewing history for the new group, and control the communication interface to transmit the exposure history of the new group and the user's viewing history for the new group to the server.

The processor may be configured to obtain a ratio of an exposure history of each of the plurality of content groups to a user's viewing history of at least one content included in each of the plurality of content groups as a score of each of the plurality of content groups.

The processor may be configured to control the display to display a first content group included in the part of the plurality of content groups in a UI of a first size and display remaining content groups included in the part of the plurality of content groups in a UI of a second size that is smaller than the first size.

The apparatus may further include a user interface, and the processor may be configured to, based on a control command or a predetermined control command to turn on the electronic apparatus being received via the user interface, control the display to display a UI corresponding to the part of the plurality of content groups.

An electronic apparatus according to another embodiment includes a display, a memory storing a neural network model and a processor connected to the display and the memory to control the electronic apparatus, the processor is configured to, by inputting an exposure history of a plurality of content groups and a user's viewing history for the plurality of content groups to the neural network model, obtain a score for each of the plurality of content groups, obtain a display position of the plurality of content groups based on the obtained score, and control the display to display a UI corresponding to a part of the plurality of content groups based on the obtained display position.

A controlling method of an electronic apparatus according to an embodiment includes identifying a plurality of contents as a plurality of content groups, obtaining a score for each of the plurality of content groups based on an exposure history of the plurality of content groups and a user's viewing history for the plurality of content groups, obtaining a display position of the plurality of content groups based on the obtained score, and displaying a UI corresponding to the part of the plurality of content groups based on the obtained display position.

The exposure history may include at least one of a history in which a UI corresponding to each of the plurality of content groups is provided or a history in which a cursor is positioned on a UI corresponding to each of the plurality of content groups.

The displaying may include displaying a UI corresponding to a content group of a first score higher than a UI corresponding to a content group of a second score that is smaller than the first score.

The method may further include, based on identifying a content group having no viewing history of the user from among the plurality of content groups, transmitting a request signal for requesting a viewing history of another user for the identified content group to a server, and based on a viewing history of the another user being received from the server, obtaining a score for the identified content group based on an exposure history of the identified content group and the viewing history of the another user.

The transmitting may include transmitting the request signal and the viewing history of the user to the server, the obtaining may include receiving the viewing history of the another user from the server, and the another user may be a user identified by the server based on a viewing history of the user.

The displaying may include, based on information regarding a new group being received from a server, displaying the part of the plurality of content groups and a UI corresponding to the new group.

The method may further include obtaining an exposure history of the new group and a user's viewing history for the new group and transmitting the exposure history of the new group and the user's viewing history for the new group to the server.

The obtaining a score may include obtaining a ratio of an exposure history of each of the plurality of content groups to a user's viewing history of at least one content included in each of the plurality of content groups as a score of each of the plurality of content groups.

The displaying may include displaying a first content group included in the part of the plurality of content groups in a UI of a first size and displaying remaining content groups included in the part of the plurality of content groups in a UI of a second size that is smaller than the first size.

### [Effect of Invention].

According to the above-described various embodiments of the present disclosure, the electronic apparatus may recommend content that is more reflective of the user's preferences by considering only the user's content viewing history, without considering the content attributes of a content group.

In addition, each recommendation engine is not required to define the attributes of a content group, which can reduce resource consumption by the recommendation engine.

Further, since the content attributes are not considered, it is possible to recommend contents efficiently without data such as metadata.

### [Brief Description of Drawings]

FIG. 1 is a view provided to explain prior art technology;
FIG. 2 is a block diagram illustrating configuration of an electronic apparatus according to an embodiment;
FIG. 3 is a block diagram illustrating detailed configuration of an electronic apparatus according to an embodiment;
FIG. 4 is a view provided to explain an exposure history of a content group according to an embodiment;
FIG. 5 is a view provided to explain an exposure history of a content group according to another embodiment;
FIG. 6 is a view provided to explain a placement of content groups based on different scores according to an embodiment;
FIG. 7 is a view provided to explain a new content group according to an embodiment;
FIG. 8 is a view provided to explain an electronic system according to an embodiment; and
FIG. 9 is a flowchart provided to explain a controlling method of an electronic apparatus according to an embodiment.

### [Detailed Description of Embodiments]

Hereinafter, the disclosure is described in detail with reference to the accompanying drawings.

General terms that are currently widely used are selected as the terms used in embodiments of the disclosure in consideration of their functions in the disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the disclosure. Therefore, the terms used in the embodiments of the disclosure need to be defined on the basis of the meanings of the terms and the contents throughout the disclosure rather than simple names of the terms.

In the disclosure, an expression "have", "may have", "include", "may include" or the like, indicates the existence of a corresponding feature (for example, a numerical value, a function, an operation or a component such as a part), and does not exclude the existence of an additional feature.

An expression, "at least one of A or/and B" should be understood as indicating any one of "A", "B" and "both of A and B."

Expressions "first", "second", and the like, used in the disclosure may indicate various components regardless of the sequence or importance of the components. These expressions are used only to distinguish one component from another component, and do not limit the corresponding components.

A term of a singular number may include its plural number unless explicitly indicated otherwise in the context. It is to be understood that a term "include", "formed of', or the like used in the application specifies the presence of features, numerals, steps, operations, components, parts, or combinations thereof, mentioned in the specification, and does not preclude the presence or addition of one or more other features, numerals, steps, operations, components, parts, or combinations thereof.

In this specification, the term 'user' may refer to a person using an electronic apparatus or a device (e.g., artificial intelligence electronic device) using the electronic apparatus.

Hereinafter, various embodiments of the present disclosure will be described in greater detail with reference to the accompanying drawings.

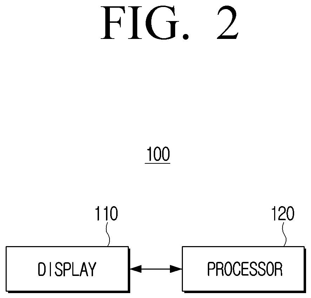

FIG. 2 is a block diagram illustrating configuration of an electronic apparatus 100 according to an embodiment.

The electronic apparatus 100 may be an apparatus for recommending content. For example, the electronic apparatus 100 may be an apparatus having a display, such as TV, desktop PC, laptop, smartphone, tablet PC, digital camera, MP3 player, PMP, cellular phone, smart glasses, smart watch, navigation system, or the like, which displays a UI corresponding to a part of a plurality of content groups directly through the display.

Alternatively, the electronic apparatus 100 may be an apparatus that provides a UI corresponding to the part of the plurality of content groups to an external display device, such as set-top box (STB), server, BD player, disk player, streaming box, or the like.

However, the electronic apparatus 100 is not limited thereto, may be any apparatus capable of recommending content.

The electronic apparatus 100 includes a display 110 and a processor 120, as shown in FIG. 2.

The display 110 may be implemented as various types of displays, such as liquid crystal displays (LCDs), organic light emitting diodes (OLEDs) displays, plasma display panels (PDPs), and the like. The display 110 may also include a driving circuit, a backlight unit, and the like, which may be implemented in the form of a-si TFTs, low temperature poly silicon (LTPS) TFTs, organic TFTs (OTFTs), and the like. Meanwhile, the display 110 may be implemented as a touch screen combined with a touch sensor, a flexible display, a three-dimensional (3D) display, and the like.

The processor 120 controls the overall operations of the electronic apparatus 100. Specifically, the processor 120 may be connected to each configuration of the electronic apparatus 100 to control the overall operations of the electronic apparatus 100. For example, the processor 120 may be connected to configurations such as the display 110, a communication interface (not shown), a memory (not shown), a user interface (not shown), and the like to control the operations of the electronic apparatus 100.

According to an embodiment, the processor 120 may be implemented as a digital signal processor (DSP), a microprocessor, or a Time controller (TCON). However, the processor 120 is not limited thereto, and may include one or more of a central processing unit (CPU), a Micro Controller Unit (MCU), a micro processing unit (MPU), a controller, an application processor (AP), a communication processor (CP), an advanced RISC machine (ARM) processor, or an artificial intelligence processor, or may be defined by the corresponding term. In addition, the processor 120 may be implemented in a system-on-chip (SoC) or a large scale integration (LSI) in which a processing algorithm is embedded, or may be implemented in the form of a field programmable gate array (FPGA).

The processor 120 may identify a plurality of contents as a plurality of content groups. For example, the plurality of content groups may include next TV and movies, original series, top movies, and the like, and the processor 120 may identify each of the plurality of content as at least one of the plurality of groups.

The processor 120 may obtain a score for each of the plurality of content groups based on the exposure history of the plurality of content groups and the user's viewing history of the plurality of content groups. For example, the processor 120 may obtain a score for each of the plurality of content groups as a ratio of the exposure history of each of the plurality of content groups to the user's viewing history of at least one content included in each of the plurality of content groups. For example, if a first content group was displayed 20 times during a week and the user viewed 10 contents from among a plurality of first contents included in the first content group, the processor 120 may obtain a score for the first content group of 10/20 = 0.5. Here, the exposure history may include at least one of a history in which a UI corresponding to each of the plurality of content groups is provided via the display 110 or a history in which a cursor is positioned on a UI corresponding to each of the plurality of content groups. The viewing history may be counted by the operation of selecting content. However, the present disclosure is not limited thereto, and there may be a variety of ways to obtain a score. In addition, the viewing history may be counted when content is viewed for more than a predetermined amount of time after being selected.

The processor 120 may obtain display positions of the plurality of content groups based on the obtained scores, and may control the display 110 to display UI corresponding to the part of the plurality of content groups based on the obtained display positions. For example, the processor 120 may control the display 110 to display a UI corresponding to a content group of a first score higher than a UI corresponding to a content group of a second score that is smaller than the first score.

The electronic apparatus 100 may further include a communication interface (not shown), and when a content group is identified among the plurality of content groups for which the user has no viewing history, the processor 120 may control the communication interface to transmit a request signal for requesting a viewing history of another user for the identified content group to a server, and when the viewing history of the another user is received from the server via the communication interface, the processor 120 may obtain a score for the identified content group based on the exposure history of the identified content group and the viewing history of the another user. Through this operation, the processor 120 may obtain a score for content groups for which the user has no viewing history.

Here, the processor 120 may control the communication interface to transmit the request signal and the user's viewing history to the server. In this case, the server may identify the another user based on the user's viewing history. The processor 120 may also receive the viewing history of the another user from the server via the communication interface. In other words, the server may identify another user whose viewing history is similar to the user's viewing history, and provide the another user's viewing history to the electronic apparatus 100, thereby allowing the processor 120 to obtain a score for a content group for which the user has no viewing history based on the another user's viewing history. Through this operation, the processor 120 may obtain a score that is more reflective of the user's viewing preferences.

The electronic apparatus 100 may further include a communication interface (not shown), and when information regarding a new group is received from the server via the communication interface, the processor 120 may control the display 110 to display the part of the plurality of content groups and a UI corresponding to the new group.

For example, the server may obtain a new content group through a new recommendation engine. In this case, the new content group may require intentional exposure because it has no exposure history and no viewing history of the user. Accordingly, the server may provide information regarding the new content group to the electronic apparatus 100. In this case, the server may provide information regarding the new content group to the part of a plurality of households utilizing the content recommendation server. Upon receiving the information regarding the new content group from the server, the processor 120 may control the display 110 to display a UI corresponding to the new content group, even if there is no score for the new content group. Subsequently, the processor 120 may transmit the exposure history of the new content group and the user's viewing history of contents included in the new content group to the server. The server may receive the exposure history of the new content group and the viewing history of the user from the part of the households that provided information regarding the new content group, and may calculated the weighted sum thereof and provide it to the remaining households.

The processor 120 may control the display 110 to display a first content group included in the part of the plurality of content groups in a UI of a first size and a second content group included in the part of the plurality of content groups in a UI of a second size that is smaller than the first size.

For example, the processor 120 may control the display 110 to display the first content group with the highest score in a UI of a first size, and remaining content groups excluding the first content group from among the part of the plurality of content groups in a UI of a second size that is smaller than the first size. The display 110 can be controlled to display. Through this operation, a UI that best reflects the user preference may be displayed.

However, the present disclosure is not limited thereto, and a UI may be configured in various ways. For example, there may be multiple content groups displayed in the UI of the first size. Alternatively, the UIs for all content groups may have the same size. Alternatively, the UI for the first content group may include a shadow effect, while the UIs for the remaining content groups are displayed without any effect.

Meanwhile, the electronic apparatus 100 may further include a user interface (not shown), and when a control command to turn on the electronic apparatus 100 or a predetermined control command is received via the user interface, the processor 120 may control the display 110 to display a UI corresponding to the part of the plurality of content groups.

Alternatively, when a control command to end viewing of currently viewed content is received via the user interface, the processor 120 may control the display 110 to display a UI corresponding to the part of the plurality of content groups.

Meanwhile, the operation of the processor 120 as described above may be implemented via a neural network model. For example, an electronic apparatus 100 includes the display 110, a memory (not shown) in which a neural network model is stored, and the processor 120 connected to the display 110 and the memory to control the electronic apparatus 100, and the processor 120 may obtain a score for each of the plurality of content groups by inputting an exposure history of the plurality of content groups and the user's viewing history for the plurality of content groups to the neural network model, obtain a display position for the plurality of content groups based on the obtained score, and control the display 110 to display a UI corresponding to the part of the plurality of content groups based on the obtained display position.

The functions related to the above-described artificial intelligence model are performed through the processor 120 and the memory.

The processor 120 may consist of one or more processors. In this case, one or more processors may be general-purpose processors such as CPU, AP, or DSP Digital Signal Processor (DSP), dedicated graphics processors such as GPU or Vision Processing Unit (VPU), or dedicated artificial intelligence processors such as NPU.

One or more processors control input data to be processed according to predefined operation rules or artificial intelligence models stored in the memory. Alternatively, when one or more processors are dedicated artificial intelligence processors, the artificial intelligence dedicated processors may be designed with a hardware structure specialized for processing a specific artificial intelligence model. The predefined operation rules or artificial intelligence models are characterized by being created through learning.

Here, "being created by the learning" means that the basic artificial intelligence model is learned using a large number of learning data by a learning algorithm and thus, predefined operation rules or artificial intelligence are set to perform the desired characteristics (or purpose). This learning may be accomplished in the device itself that performs artificial intelligence according to the present disclosure, or may be accomplished through a separate server and/or system. Examples of learning algorithms include, but are not limited to, supervised learning, unsupervised learning, semi-supervised learning, or reinforcement learning.

An artificial intelligence model may consist of a plurality of neural network layers. Each of the plurality of neural network layers has a plurality of weight values, and neural network calculation is performed through calculation between the calculation result of the previous layer and the plurality of weights. The plurality of weights of the plurality of neural network layers may be optimized by the learning results of the artificial intelligence model. For example, during the learning process, the plurality of weights may be updated so that loss or cost values obtained from the artificial intelligence model are reduced or minimized.

The artificial neural network may include a deep neural network (DNN), for example, Convolutional Neural Network (CNN), Deep Neural Network (DNN), Recurrent Neural Network (RNN), Restricted Boltzmann (RBM) Machine), DBN (Deep Belief Network), BRDNN (Bidirectional Recurrent Deep Neural Network), or Deep Q-Networks, etc., but are not limited thereto.

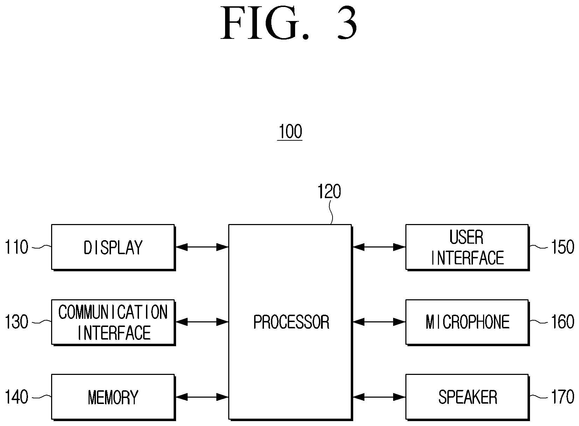

FIG. 3 is a block diagram illustrating detailed configuration of an electronic apparatus according to an embodiment. The electronic apparatus 100 may include the display 110 and the processor 120. In addition, according to FIG. 3, the electronic apparatus 100 may further include a communication interface 130, a memory 140, a user interface 150, a microphone 160, and a speaker 170. the part of the components shown in FIG. 3 overlap with those shown in FIG. 2, so further description thereof will be omitted.

The communication interface 130 is configured to perform communication with various types of external devices according to various types of communication methods. For example, the electronic apparatus 100 may perform communication with a server via the communication interface 130.

The communication interface 130 may include a Wi-Fi module, a Bluetooth module, an infrared communication module, a wireless communication module, and the like. Here, each communication module may be implemented in the form of at least one hardware chip.

The Wi-Fi module and the Bluetooth module perform communication using a Wi-Fi method and a Bluetooth method, respectively. When using a Wi-Fi module or a Bluetooth module, various connection information such as SSID and session key are first transmitted and received, and various information can be transmitted and received after establishing communication connection using this. The infrared communication module performs communication according to an infrared Data Association (IrDA) communication technology which transmits data wirelessly over a short distance using infrared rays between optical light and millimeter waves.

The wireless communication module includes at least one communication chip that performs communication according to various wireless communication standards, such as Zigbee, 3rd Generation (3G), 3rd Generation Partnership Project (3GPP), Long Term Evolution (LTE), LTE advanced (LTE-A), 4th Generation (4G), 5th Generation (5G), etc.

Alternatively, the communication interface 130 may include a wired communication interface such as HDMI, DP, Thunderbolt, USB, RGB, D-SUB, DVI, etc.

In addition, the communication interface 130 may include at least one of a Local Area Network (LAN) module, an Ethernet module or a wired communication module that performs communication using a pair cable, a coaxial cable or an optical fiber cable.

The memory 140 may refer to hardware that stores information such as data in electrical or magnetic form so that the processor 120 or the like can access the information. To this end, the memory 140 may be implemented as at least one hardware among non-volatile memory, volatile memory, flash memory, hard disk drive (HDD) or Solid State Drive (SSD), RAM, ROM or the like.

The memory 140 may store at least one instruction or module required for the operation of the electronic apparatus 100 or the processor 120. Here, the instruction is a code unit that instructs the operation of the electronic apparatus 100 or the processor 120, and may be written in a machine language that can be understood by a computer. The module may be a set of instructions that perform a specific task for a unit of work.

The memory 140 may store data, which is information in bits or bytes that can represent letters, numbers, images, etc. For example, the memory 140 may store a plurality of contents.

The memory 140 may store a content recommendation engine module, a UI generation modules, and the like.

The memory 140 may store various neural network models. For example, the memory 140 may store a neural network model that obtains a score for each of the plurality of content groups from an exposure history of the plurality of content groups and a user's viewing history for the plurality of content groups.

The memory 140 is accessed by the processor 120, and read/write/modify/delete/update instructions, modules, or data may be performed by the processor 120.

The user interface 150 may be implemented as a button, a touch pad, a mouse, a keyboard, etc., or may be implemented as a touch screen that can also perform a display function and a manipulation input function. Here, the button may be a various types of buttons such as a mechanical button, a touch pad, a wheel, etc. formed in any arbitrary area such as the side, the back, etc.

The microphone 160 is configured to receive sound input and convert it into an audio signal. The microphone 160 is electrically connected to the processor 120, and may receive sound under the control of the processor 120. Here, the sound may include sound generated by at least one of the electronic apparatus 100 or other electronic apparatuses in the vicinity of the electronic apparatus 100, and noise in the vicinity of the electronic apparatus 100.

For example, the microphone 160 may be integrally formed in the direction of the top, front, side, etc. of the electronic apparatus 100. Alternatively, the microphone 160 may be formed on a remote controller, etc. that is separate from the electronic apparatus 100. In this case, the remote controller may receive sound through the microphone 160, and provide the received sound to the electronic apparatus 100.

The microphone 160 may include various components such as a microphone that collects analog sound, an amplification circuit that amplifies the collected sound, an A/D conversion circuit that samples the amplified sound and converts it into a digital signal, a filter circuit that removes noise components from the converted digital signal, etc.

Meanwhile, the microphone 160 may be implemented in the form of a sound sensor or in any form that can collect sound.

The speaker 170 is configured to output not only various audio data processed by the processer 120 but also various notification sounds, voice messages, etc.

With the above operation, the electronic apparatus 100 may recommend content considering only the user's content viewing history, thereby reflecting the user's preferences more and the content recommendation performance does not deteriorate even if there is no information such as metadata. In addition, content groups with high scores are displayed at the top, thereby increasing the user's content consumption. Further, since the above score considers exposure history and the user's content viewing history, the performance of the recommendation engine can be evaluated through the score.

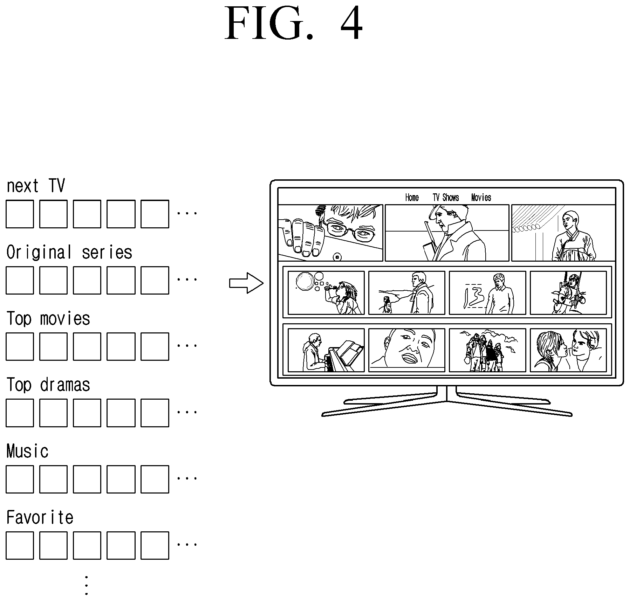

Hereinafter, the operation of the electronic apparatus 100 will be described in greater detail with reference to FIGS. 4 to 8. In particular, FIGS. 4 to 8 describe individual embodiments for convenience of explanation. However, the individual embodiments of FIGS. 4 to 8 may be practiced in any combination.

FIG. 4 is a view provided to explain an exposure history of a content group according to an embodiment.

The processor 120 may identify a plurality of contents as a plurality of content groups. For example, the processor 120 may identify a plurality of contents as a plurality of content groups, such as next TV, original series, top movies, top dramas, music, favorite, and the like, as shown on the left side of FIG. 4. Here, a content may be identified with one or more of the plurality of content groups. For example, content A may be identified as next TV and original series.

Information regarding the plurality of contents and the plurality of content groups categorized as shown on the left side of FIG. 4 may be stored in the memory 140.

The processor 120 may control the display 110 to display the part content groups with high scores from among the plurality of content groups, as shown on the right side of FIG. 4. For example, the processor 120 may control the display 110 such that a UI corresponding to a content group with a first score is displayed higher than a UI corresponding to a content group with a second score that is smaller than the first score. In other words, the part of the plurality of content groups may be displayed via the display 110, while others may not be displayed until a scroll command is entered by the user.

The processor 120 may update the exposure history of each of the plurality of content groups based on the history provided via the display 110 by the UI corresponding to each of the plurality of content groups. For example, the processor 120 may add the exposure history of the first through third rows of content groups once after displaying content groups as shown on the right side of FIG. 4. For example, the memory 140 may store information that the exposure history of the content groups of the first row is 10 times, and the processor 120 may modify the information stored in the memory to 11 times as the content groups in the first row are exposed, as shown on the right side of FIG. 4.

The processor 120 may display additional content groups in response to a scroll command from the user. In this case, the processor 120 may add one exposure history of the additionally displayed content group.

With the above operation, the processor 120 may identify the exposure history of the content groups.

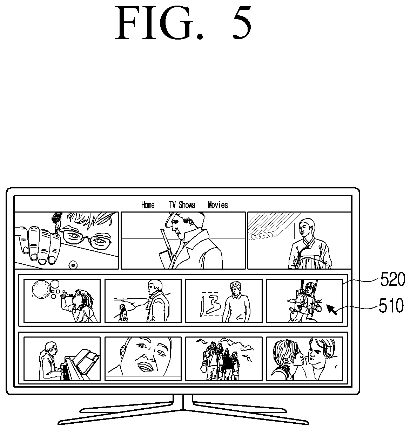

FIG. 5 is a view provided to explain an exposure history of a content group according to another embodiment.

The processor 120 may update the impression history of each of the plurality of content groups based on the history of a cursor positioned on the UI corresponding to each of the plurality of content groups. For example, when a cursor 510 is positioned on the content 520, as shown in FIG. 5, the processor 120 may add one exposure history of the content group including content 520. Alternatively, the processor 120 may add one exposure history of the content group including the content 520 when the cursor 510 is positioned on the content 520 for more than a predetermined amount of time.

For convenience of explanation, FIGS. 4 and 5 illustrate an embodiment in which a single exposure history is added, but the present disclosure is not limited thereto. For example, the processor 120 may update the exposure history of each of the plurality of content groups by, for example, increasing the exposure history of each of the plurality of content groups by two times based on at least one of a history of UIs corresponding to each of the plurality of content groups being provided via the display 110 or a history of the cursor being positioned on UIs corresponding to each of the plurality of content groups. In addition, the exposure history of content groups that are no longer provided via the display 110 in response to the user's scroll command may be updated, for example, by decreasing the exposure history thereof by one time. In this case, the content groups may be further categorized into content groups that were simply exposed, content groups that were selected by the user after exposure, content groups that were not exposed, etc. to further reflect the user intent.

Alternatively, the processor 120 may store the exposure history of the plurality of content groups in a plurality of time intervals. In this case, the processor 120 may obtain a score using the exposure history stored in the memory 140 based on the current time.

Alternatively, the electronic apparatus 100 may further include a camera, and the processor 120 may identify users from images taken via the camera and store the exposure history of a plurality of content groups for each identified user. In this case, the processor 120 may obtain a score using the exposure history stored in the memory 140 based on the user currently utilizing the electronic apparatus 100.

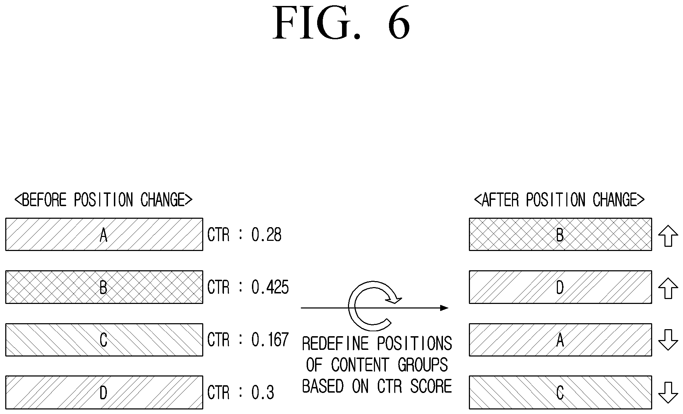

FIG. 6 is a view provided to explain a placement of content groups based on different scores according to an embodiment.

The processor 120 may obtain a score for each of the plurality of content groups based on the exposure history of the plurality of content groups and the user's viewing history for the plurality of content groups. Subsequently, when an event occurs, such as further exposure of the content groups or viewing of the contents by the user, the processor 120 may recalculate a score for each of the plurality of content groups.

For example, as shown in FIG. 6, the processor 120 may reobtain the score (click through ratio, CTR) of content group A as 0.28 based on the exposure history and viewing history of content group A, reobtain the score of content group B as 0.425 based on the exposure history and viewing history of content group B, reobtain the score of content group C as 0.167 based on the exposure history and viewing history of content group C, and obtain the score of content group D as 0.3 based on the exposure history and viewing history of content group D.

In this case, the processor 120 may move content group B and content group D, which have higher scores, upward, and content group A and content group C, which have lower scores, downward.

Meanwhile, although FIG. 6 illustrates that the content group with a high score is placed at the top, the present disclosure is not limited thereto. For example, the processor 120 may place the content group with a high score in the middle of the display 110. In this case, the processor 120 may display the UI of the middle content group larger than the UI of the remaining content groups to emphasize the middle content group.

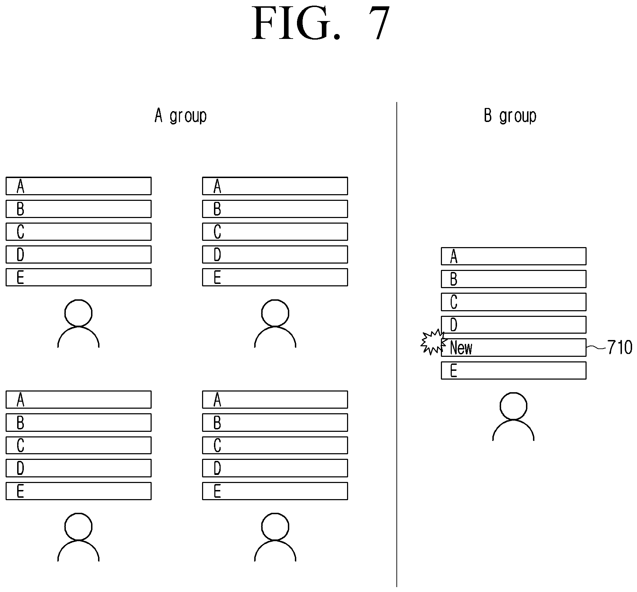

FIG. 7 is a view provided to explain a new content group according to an embodiment.

The server may obtain a new content group through a new recommendation engine. For example, when an event occurs, such as a new genre being defined or a new OTT platform being added, the server may obtain the new content group through the new recommendation engine.

In this case, the new content group may require intentional exposure because it has no exposure history and no viewing history of the user. Accordingly, the server may provide information regarding the new content group to the electronic apparatus 100. Here, the server may provide information regarding the new content group to the part of the households of the plurality of households utilizing the content recommendation service. For example, the server may not provide information regarding the new content group to group A, but may provide information regarding the new content group to group B, as shown in FIG. 7.

If the electronic apparatus 100 belongs to group B, the processor 120 may receive information regarding the new content group from the server. When the processor 120 receives information regarding the new content group, the processor 120 may control the display 110 to display a UI corresponding to the new content group at a predetermined location, even if there is no score for the new content group. For example, the processor 120 may control the display 110 to display a UI 710 corresponding to the new content group in the second row from the bottom, as shown on the right side of FIG. 7.

In this case, the processor 120 may provide a graphical effect to the UI 710 corresponding to the new content group to represent the new content. For example, the processor 120 may add a graphical image representing the new content to the UI 710 corresponding to the new content group. Alternatively, the processor 120 may provide a graphical effect of a predetermined color on the border of the UI 710 corresponding to the new content group.

The processor 120 may transmit the exposure history of the new content group and the user's viewing history of the content included in the new content group to the server. The server may receive the exposure history of the new content group and the user's viewing history from group B, and may weight provide it to A group A.

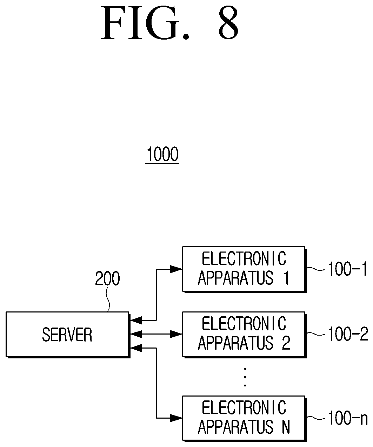

FIG. 8 is a view provided to explain an electronic system 1000 according to an embodiment.

As shown in FIG. 8, the electronic system 1000 may include a plurality of electronic apparatuses 100-1 to 100-N and a server 200.

The server 200 may receive from the plurality of electronic apparatuses 100-1 to 100-n the exposure history of each of the plurality of content groups and the user's viewing history for the plurality of content groups. The server 200 may obtain a neural network model by learning the exposure history of each of the plurality of content groups, the viewing history of the user for the plurality of content groups, and the score of the plurality of content groups. The server 200 may provide the neural network model to the plurality of electronic apparatuses 100-1 to 100-n.

The processor 120 may receive the neural network model from the server 200, obtain a score for each of the plurality of content groups by inputting the exposure history of the plurality of content groups and the user's viewing history of the plurality of content groups to the neural network model, obtain a display position for the plurality of content groups based on the obtained score, and control the display 110 to display a UI corresponding to the part of the plurality of content groups based on the obtained display position.

With the above operation, the processor 120 may obtain neural network computation results that reflect the user's tastes and preferences.

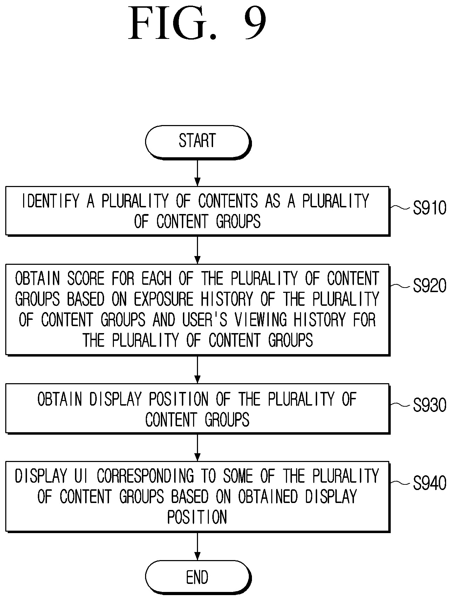

FIG. 9 is a flowchart provided to explain a controlling method of an electronic apparatus according to an embodiment.

Firstly, a plurality of contents are identified as a plurality of content groups (S910). Next, a score for each of the plurality of content groups is obtained based on the exposure history of the plurality of content groups and the user's viewing history of the plurality of content groups (S920). Subsequently, a display position of the plurality of content groups is obtained based on the obtained score (S930). Then, a UI corresponding to a part of the plurality of content groups is displayed based on the obtained display position (S940).

Here, the exposure history may include at least one of a history in which a UI corresponding to each of the plurality of content groups is displayed or a history in which a cursor is positioned on a UI corresponding to each of the plurality of content groups.

On the other hand, the displaying step (S940) may include displaying the UI corresponding to the content group of the first score higher than the UI corresponding to the content group of the second score that is smaller than the first score.

In addition, when a content group with no viewing history of the user is identified from among the plurality of content groups, the step of transmitting a request signal requesting a viewing history of another user for the identified content group to the server is further included, and the step of obtaining a score (S920) includes, when the viewing history of the another user is received from the server, obtaining a score for the identified content group based on the exposure history of the identified content group and the viewing history of the another user.

Here, the transmitting step may include transmitting the request signal and the viewing history of the user to the server, and the step of obtaining a score (S920) may include receiving the viewing history of another user from the server, and the another user may be a user identified by the server based on the viewing history of the user.

Meanwhile, the displaying step (S940) may include, when information regarding the new group is received from the server, displaying the part of the plurality of content groups and a UI corresponding to the new group.

Here, the method may further include obtaining the exposure history of the new group and the viewing history of the user for the new group, and transmitting the exposure history of the new group and the viewing history of the user for the new group to the server.

Meanwhile, the step of obtaining a score (S920) may including obtaining a ratio of the exposure history of each of the plurality of content groups to the viewing history of the user of at least one content included in each of the plurality of content groups as a score for each of the plurality of content groups.

In addition, the displaying step (S940) may include displaying a first content group included in the part of the plurality of content groups in a UI of a first size and the remaining content groups included in the part of the plurality of content groups in a UI of a second size that is smaller than the first size.

Further, the displaying step (S940) may include displaying a UI corresponding to the part of the plurality of content groups when a control command to turn on the electronic apparatus or a predetermined control command is received.

In accordance with various embodiments of the present disclosure, the electronic apparatus may recommend content that is more reflective of the user's preferences by considering only the user's content viewing history, rather than considering the content attributes of content groups.

In addition, each recommendation engine is not required to define the attributes of content groups, which can reduce resource consumption by recommendation engine.

Further, since content attributes are not taken into consideration, it is possible to make content recommendations efficiently even if there is no data such as metadata, etc.

Meanwhile, according to an embodiment, the above-described various embodiments may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: a drying apparatus (A)). In case an instruction is executed by a processor, the processor may perform a function corresponding to the instruction by itself, or by using other components under its control. An instruction may include a code that is generated or executed by a compiler or an interpreter. The machine-readable storage medium may be provided in a form of a non-transitory storage medium. Here, the term "non-transitory" means that the storage medium is tangible without including a signal, and does not distinguish whether data are semi-permanently or temporarily stored in the storage medium.

In addition, according to an embodiment, the above-described methods according to the various embodiments may be included and provided in a computer program product. The computer program product may be traded as a product between a seller and a purchaser. The computer program product may be distributed in a form of a storage medium (for example, a compact disc read only memory (CD-ROM)) that may be read by the machine or online through an application store (for example, PlayStoreTM). In case of the online distribution, at least a portion of the computer program product may be at least temporarily stored in a storage medium such as a memory of a server of a manufacturer, a server of an application store, or a relay server or be temporarily generated.

In addition, according to an embodiment, the above-described various embodiments are may be implemented in a recording medium that can be read by a computer or a similar device using software, hardware, or a combination thereof. In some cases, embodiments described herein may be implemented by a processor itself. According to software implementation, embodiments such as procedures and functions described in this specification may be implemented as separate software modules. Each the software modules may perform one or more functions and operations described herein.

Meanwhile, computer instructions for performing processing operations of devices according to the above-described various embodiments may be stored in a non - transitory computer-readable medium. When being executed by a processor of a specific device, the computer instructions stored in such a non-transitory computer-readable medium allows the specific device to perform processing operations in the device according to the above-described various embodiments. The non-transitory computer-readable medium refers to a medium that stores data semi-permanently and can be read by a device, rather than a medium that stores data for a short period of time, such as registers, caches, and memories. Specific examples of the non-transitory computer-readable medium may include CD, DVD, hard disk, Blu-ray disk, USB, memory card, ROM, etc.

The components (for example, modules or programs) according to various embodiments described above may include a single entity or a plurality of entities, and some of the corresponding sub-components described above may be omitted or other sub-components may be further included in the various embodiments. Alternatively or additionally, some components (e.g., modules or programs) may be integrated into one entity and perform the same or similar functions performed by each corresponding component prior to integration. Operations performed by the modules, the programs, or the other components according to the diverse embodiments may be executed in a sequential manner, a parallel manner, an iterative manner, or a heuristic manner, at least some of the operations may be performed in a different order or be omitted, or other operations may be added.

Although preferred embodiments of the present disclosure have been shown and described above, the disclosure is not limited to the specific embodiments described above, and various modifications may be made by one of ordinary skill in the art without departing from the spirit of the disclosure as claimed in the claims, and such modifications are not to be understood in isolation from the technical ideas or prospect of the disclosure.

## Claims

1. An electronic apparatus comprising:
a display; and
a processor connected to the display and configured to control the electronic apparatus,
wherein the processor is configured to:
identify a plurality of contents as a plurality of content groups;
obtain a score for each of the plurality of content groups based on an exposure history of the plurality of content groups and a user's viewing history for the plurality of content groups;
obtain a display position of the plurality of content groups based on the obtained score; and
control the display to display a UI corresponding to a part of the plurality of content groups based on the obtained display position.

2. The apparatus as claimed in claim 1, wherein the exposure history includes at least one of a history in which a UI corresponding to each of the plurality of content groups is provided via the display or a history in which a cursor is positioned on a UI corresponding to each of the plurality of content groups.

3. The apparatus as claimed in claim 1, wherein the processor is configured to control the display to display a UI corresponding to a content group of a first score higher than a UI corresponding to a content group of a second score that is smaller than the first score.

4. The apparatus as claimed in claim 1, further comprising:
a communication interface,
wherein the processor is configured to:
based on identifying a content group having no viewing history of the user from among the plurality of content groups, control the communication interface to transmit a request signal for requesting a viewing history of another user for the identified content group to a server; and
based on a viewing history of the another user being received from the server via the communication interface, obtain a score for the identified content group based on an exposure history of the identified content group and the viewing history of the another user.

5. The apparatus as claimed in claim 4, wherein the processor is configured to:
control the communication interface to transmit the request signal and the viewing history of the user to the server; and
receive the viewing history of the another user from the server via the communication interface,
wherein the another user is a user identified by the server based on a viewing history of the user.

6. The apparatus as claimed in claim 1, further comprising:
a communication interface,
wherein the processor is configured to, based on information regarding a new group being received from a server via the communication interface, control the display to display the part of the plurality of content groups and a UI corresponding to the new group.

7. The apparatus as claimed in claim 6, wherein the processor is configured to:
obtain an exposure history of the new group and a user's viewing history for the new group;
control the communication interface to transmit the exposure history of the new group and the user's viewing history for the new group to the server.

8. The apparatus as claimed in claim 1, wherein the processor is configured to: obtain a ratio of an exposure history of each of the plurality of content groups to a user's viewing history of at least one content included in each of the plurality of content groups as a score of each of the plurality of content groups.

9. The apparatus as claimed in claim 1, wherein the processor is configured to: control the display to display a first content group included in the part of the plurality of content groups in a UI of a first size and display remaining content groups included in the part of the plurality of content groups in a UI of a second size that is smaller than the first size.

10. The apparatus as claimed in claim 1, further comprising:
a user interface,
wherein the processor is configured to:
based on a control command or a predetermined control command to turn on the electronic apparatus being received via the user interface, control the display to display a UI corresponding to the part of the plurality of content groups.

11. A controlling method of an electronic apparatus, the method comprising:
identifying a plurality of contents as a plurality of content groups;
obtaining a score for each of the plurality of content groups based on an exposure history of the plurality of content groups and a user's viewing history for the plurality of content groups;
obtaining a display position of the plurality of content groups based on the obtained score; and
displaying a UI corresponding to a part of the plurality of content groups based on the obtained display position.

12. The method as claimed in claim 11, wherein the exposure history includes at least one of a history in which a UI corresponding to each of the plurality of content groups is provided or a history in which a cursor is positioned on a UI corresponding to each of the plurality of content groups.

13. The method as claimed in claim 11, wherein the displaying comprises displaying a UI corresponding to a content group of a first score higher than a UI corresponding to a content group of a second score that is smaller than the first score.

14. The method as claimed in claim 11, further comprising:
based on identifying a content group having no viewing history of the user from among the plurality of content groups, transmitting a request signal for requesting a viewing history of another user for the identified content group to a server,
wherein the obtaining a score comprises:
based on a viewing history of the another user being received from the server, obtaining a score for the identified content group based on an exposure history of the identified content group and the viewing history of the another user.

15. The method as claimed in claim 14, wherein the transmitting comprises transmitting the request signal and the viewing history of the user to the server;
wherein the obtaining a score comprises receiving the viewing history of the another user from the server; and
wherein the another user is a user identified by the server based on a viewing history of the user.
